# EUROPEAN PATENT APPLICATION

(11) **EP 1 300 511 A2**
(43) Date of publication of application: **09.04.2003**
(21) Application number: 02019435.3
(22) Date of filing: 30.08.2002
(51) Int. Cl.: D21H 15/10, D21H 13/40, D21H 25/04, D04H 1/54, D04H 1/60, D04H 13/00

(54) **Thermo formable acoustical panel**

(30) Priority: 20.09.2001 US 956665
(71) Applicant: Armstrong World Industries, Inc., Lancaster Pennsylvania 17603 (US)
(72) Inventor: Christie, Peter A., Lancaster, Pennsylvania 17603 (US); Wiker, Anthony L., Lancaster, Pennsylvania 17601 (US); Springer, Brian l., Lancaster, Pennsylvania 17601 (US); Garrick, John R., Lancaster, Pennsylvania 17603 (US); Heisey, Kenneth E., Elizabethtown, Pennsylvania 17022 (US)
(74) Representative: Finck, Dieter, Dr.Ing.

(57) **Abstract**

Disclosed is both a method and composition for forming a thermo-formable acoustical panel. The panel may be formed from multi-component polymer fibers or mono-filament polymer fibers dispersed in a mineral fiber batt. The polymer fibers are bound to the mineral fibers by the application of heat to form the acoustical panel.

## Description

### FIELD OF INVENTION

The present invention generally relates to acoustical panels and more specifically to thermo formable acoustical panels.

### BACKGROUND

Fibrous acoustical panels are used for a variety of different purposes and are comprised of an array of different fibers, binders and fillers. Primarily, fibrous panels are made from mineral wool, perlite, cellulosic fibers, fillers and binders.

Fibrous panel production utilizes combinations of fibers, fillers, bulking agents, binders, water, surfactants and other additives mixed into a slurry and processed into a fibrous panel. Examples of fibers used may include mineral wools, fiberglass, and cellulosic material. Mineral wool is a lightweight, vitreous, silica-based material spun into a fibrous structure similar to fiberglass. Cellulosic material is typically in the form of newsprint. Added fillers may include expanded perlite, brighteners, such as titanium oxide, and clay. Expanded perlite reduces material density and clay enhances fire resistance. Examples of binders used in fibrous panels include starch, latex and reconstituted paper products which link together and create a binding system locking all ingredients into a structural matrix.

Organic binders, such as starch, are often the primary component providing structural adhesion for the fibrous panel. Starch is often the preferred organic binder because it is relatively inexpensive. For example, fibrous panels containing newsprint, mineral wool and perlite can be bound together by starch. Starch imparts both strength and durability to the fibrous panel structure, but is susceptible to moisture and sag.

Synthetic polymeric materials such as styrene-acrylate lattices and polyethylene terepthalate mono-filament fibers have been used to bind mineral fiber-based articles together in an effort to overcome the deficiencies of organic binders. For example, one current method provides for disposing a surface charge of styrene-acrylate lattices onto cellulosic components of a mineral fiber panel during the wet formation process with subsequent drying serving to coalesce the latex and bind the fibers and particulates. The use of such moisture insensitive binders provides for a more dimensionally stable and sag resistant panel. A further example includes attaching polymeric fibers and melted fiber particulates onto fiberglass by directing a stream of mono-filament high weight polymeric fibers into a hot stream of newly formed fiberglass, collecting the polymer treated fibers, and then heat-forming into an article.

Fibrous acoustical panels formed from mineral fiber are inflexible and cannot be molded into curved or irregular shapes. Furthermore, embossing such boards is only accomplished with great difficulty using processes that are destructive and which reduce porosity and destroy the acoustical performance. Such panels are often bound with starch and have a high density of about 12-16 lb/ft³. The formed panels break readily and do not absorb impact energy. They are easily dented, particularly those with densities low enough to possess high acoustical absorption characteristics. Maximum noise reduction coefficients, NRC values, are approximately 0.75. Thin panels of such compositions must necessarily have less porosity to be strong enough for transporting, handling and installation. These thin panels have even poorer acoustical absorption characteristics, with NRC values in the range of 0.45-0.55.

The other major category of acoustical fibrous panels includes panels made from fiberglass bound with a phenolic resin. Fiberglass is a relatively long continuous fiber compared to rock or slag mineral wools. Fiberglass panels have significantly greater acoustical absorption character than current mineral fiber products. Fiberglass panels are inflexible because the thermoset binder cannot be post-formed. The panels are yellow and have irregular surfaces and density inhomogeneities. An expensive scrim coat and paint are required to hide the yellow color, while also albwing acoustical permeation. Further, the phenolic resins traditionally employed to bind fiberglass batts have associated environmental problems. The resins deposit on process equipment, requiring frequent shut-downs and cleaning of the equipment. Formaldehyde gas is evolved as the resin cures.

Thus, a flexible acoustical panel that can be molded and embossed and that is highly acoustically absorbent and possesses a smooth paintable surface is desirable. Additionally, it would be desirable if the panel could be made thin, yet relatively durable and possessing a high NRC value. Furthermore, a panel that is not moisture sensitive and requires no coating or back-coating systems to prevent the panel from sagging in a humid environment would also be desirable.

### SUMMARY

The present invention provides both a composition and method for forming a thermo-formable acoustical panel. The panel may be formed from multi-component polymer fibers or mono-filament polymer fibers dispersed in a mineral fiber batt. The polymer fibers are bound to the mineral fibers by the application of heat.

In greater detail, the acoustical panel includes multi-component polymer fibers having a sheath layer which substantially surrounds an inner core 4. The sheath layer comprises a first polymer having a melting point which is less than the melting point of a second polymer comprising the inner core. Additionally, the acoustical panel is comprised of mineral fibers or mineral wool. The acoustical panel may also include cellulose and perlite and be coated with an organic coating or a scrim. The acoustical panel typically has a density of between about 5 lb./ft³ to about 20 Ib./ft³ and an NRC value of at least 0.65.

The method of forming an acoustical panel includes the steps of providing multi-component polymer fibers having a sheath layer surrounding an inner core. The sheath layer is comprised of a first polymer having a melting point lower than a melting point of a second polymer comprising the inner core. The provided polymers are then mixed with mineral fibers to from a fibrous batt. The fibrous batt is then heated to melt the sheath polymer layer to bind the polymer fibers to the mineral fibers of the fibrous batt to form the acoustical panel. The fibers may be either mixed and dispersed in a high velocity air stream or combined with water to form a wet mixture which is then dewatered to form a fibrous batt. The fibrous batt may be consolidated to add strength to the acoustical panel. The panel may be consolidated by sequential heating and cooling and pressing the formed acoustical panel.

A further embodiment includes a method of forming the acoustical panel comprising the steps of providing mono-filament polymer fibers which are dispersed and mixed with mineral fibers in an aqueous mix to form a wet fibrous batt. The wet fibrous batt is then de-watered and heated to bond the polymer fibers to the mineral fibers by melting the polymer fibers.

An additional method of forming an acoustical panel comprises the steps of providing dispersible polymer particulate binders which are dispersed and mixed with mineral fibers in a high velocity air stream to form a fibrous batt. The batt is then heated and the particulate binders are then melted to bond the fibrous batt to form the acoustical panel.

A further embodiment includes a method of forming an acoustical panel including the steps of providing dispersible polymer particulate binders having a glass transition temperature of between about -50°C to about 75°C and dispersing and mixing the particulate binders with mineral wool fibers in an aqueous mix to form a wet fibrous batt. The wet fibrous batt is then de-watered to form a dewatered batt which is then heated to melt the particulate binders within the dewatered batt to form the acoustical panel.

An additional embodiment includes a multi-layered acoustical panel comprising at least a first and second layer. The first layer includes multi-component polymer fibers having a sheath layer substantially surrounding an inner core. The sheath layer is comprised of a first polymer having a melting point lower than a melting point of a second polymer comprising the inner core and mineral fiber. The second layer is in contact with the first layer and the second layer which includes both a binder and filler.

A further embodiment includes a method of forming an acoustical panel comprising a first mono-filament polymer fiber and a second mono-filament polymer fiber. The first polymer fiber has a melting point which is lower than the melting point of the second polymer fiber. The combined first and second fibers are then dispersed and mixed with mineral wool fibers in an aqueous mix to form a wet fibrous batt. The wet fibrous batt is dewatered and heated. Upon heating, the first polymer fiber substantially melts and binds the fibers together to aid in forming the acoustical panel.

In an additional embodiment, a method of forming an acoustical panel comprises providing both dispersible polymer particulate binders and polymer fibers and dispersing and mixing them with mineral wool to form a fibrous mix. The fibrous mix is then combined to form a fibrous batt which is heated to substantially melt the particulate binders within the fibrous batt to form the acoustical panel.

### BRIEF DESCRIPTION OF THE DRAWINGS

In the drawings:
Figure 1 is a schematic view of the multi-component polymer fiber illustrating the outer sheath surrounding the inner core;
Figure 2 is a schematic cross-sectional view of a mineral batt having the multi-component polymer fibers interspersed within the mineral wool;
Figure 3 is a schematic cross-sectional view of the heated fibrous batt having a melted polymer sheath layer which has flowed into the wool fiber matrix; and
Figure 4 represents a compressed and consolidated finished acoustical panel.

### DETAILED DESCRIPTION

The present invention provides both a composition and method for forming a thermo-formable acoustical panel. The panel may be formed from multi-component polymer fibers or mono-filament polymer fibers dispersed in a mineral fiber batt. The polymer fibers are bound to the mineral fibers by the application of heat.

### Multi-component polymer

In greater detail, the multi-component polymer fiber typically comprises at least two polymers. A bicomponent polymer fiber 6 typically consists of a sheath layer 2 which substantially surrounds an inner core 4. The sheath layer 2 substantially encases the inner core 4. The sheath layer 2 is not required to totally surround or encase the inner core 4. The sheath layer 2 is comprised of a polymer having a lower melting point than the inner core 4. The difference in the melting point is such that upon the application of heat the sheath layer 2 softens or melts and bonds with the surrounding fibers which are typically mineral fibers. The inner core 4 preferably remains substantially intact or unmelted such that the inner core 4 fiber provides a fibrous support for the panel.

The multi-component panel may be either dry formed or wet formed. The method of forming the panel includes dispersing and mixing the polymer fibers with mineral wool fibers to form a fibrous batt 8 and heating the fibrous batt 8 to melt the sheath polymer layer to form the acoustical panel. In the dry forming process the mineral fibers are mixed and dispersed in a high velocity air stream. In the wet forming process the polymer fibers and mineral fibers are mixed with water to form a wet mixture and then dewatered to form the fibrous batt 8.

In the step of heating the fibrous batt 8 the batt is heated to a temperature above the melting temperature of the first polymer and below the melting temperature of the second polymer. The method may further comprise consolidating the formed acoustical panel by sequential heating and cooling. The panel may be further processed by pressing the formed acoustical panel into either a flat or curved shape.

The acoustical panel commonly comprises mineral fibers or mineral wool. Mineral wool may comprise fibers of rock wool or basalt wool. The fibers, in general, have a diameter of about 3 to about 6 microns. Further, the fibers may be used in the "sized" or "naked" state. Sizing agents such as mineral oils or acrylic polymer dispersions may be employed. These fibers contribute to the structural integrity and strength of the panel.

To provide additional strength and sag resistance, the panel can further comprise cellulose fibers derived from wood fibers, primary paper fibers, secondary paper fibers, or cotton linters. Such primary and secondary paper fibers respectively include pre-and post-consumer paper products, such as newsprint paper. The fiber length can be up to about 1/4 inch in length or greater. In one embodiment, the cellulosic fibers are newsprint fibers, which generally have a length of from about 1/4 millimeter to about 5 millimeters with an average length of about 1 millimeter. Specifically, the newsprint comprises cellulosic fibers that contribute to the wet strength of the board as it is converted from the slurry to a substantially solid wet felt enroute to becoming the panel in the wet forming process.

Retention agents may be utilized in wet forming process to assist in retaining the base binder, non-fibrous fillers, and fibers therein during de-watering operations. There are many such retention agents available on the market which can be employed in the present invention. One such retention agent is a cationic polyacrylamide marketed as PURACHEM 240 EC by Hercules Chemical Co.

Non-fibrous fillers may be employed in the panel in an amount from 0 to about 20 dry wt. %. The non-fibrous fillers can be selected from kaolin clay, calcium carbonate, silica, vermiculite, ball clay or bentonite, talc, mica, gypsum, and combinations thereof.

Expanded perlite can also be employed in the panel in an amount from 0 to about 30 dry wt. %. Perlite is a volcanic glass ore, similar to obsidian with the capacity to expand greatly on heating, typically comprising silica, aluminum, calcium or other alkaline earth silicate. Perlite contributes to the bulk and hardness of the panel. Expanded perlite and a methods of making expanded perlite are discussed in U.S. Patent No. 5,911,818, which is incorporated herein by reference. Generally, perlite contains 65-75% SiO₂, 10-20% Al₂O₃, 2-5% H₂O, and smaller amounts of soda, potash, and lime. Expanded perlite denotes any glass rock and more particularly a volcanic glass that has been expanded suddenly or "popped" while being heated rapidly. This "popping" generally occurs when the grains of crushed perlite are heated to the temperatures of incipient fusion. The water contained in the particles is converted into steam and the crushed particles expand to form light, fluffy, cellular particles. Volume increases of the particles of at least ten fold are common. Expanded perlite is generally characterized by a system of concentric, spheroidal cracks, which are called perlite structure. Different types of perlite are characterized by variations in the composition of the glass affecting properties such as softening point, type, and degree of expansion, size of the bubbles and wall thickness between them, and porosity of the product.

To provide fire-retardancy, the panel may include colemanite or boric acid. Boric acid may also be added to assists the panel in resisting color degradation during welt felt drying operations. Other such flame-proofing agents may be employed. Furthermore, pigments, water repellant may be employed.

Additional water and "dry broke" may be added. The "dry broke" is predominately recycled board material that may have been rejected or cut from the commercially acceptable boards, as well as other waste products.

Additional additives, such as dispersants, defoaming agents, fungicides, and combinations thereof, may be added in the formation of the panel. Such additives are known in the art and may be readily employed by those of ordinary skill in the art.

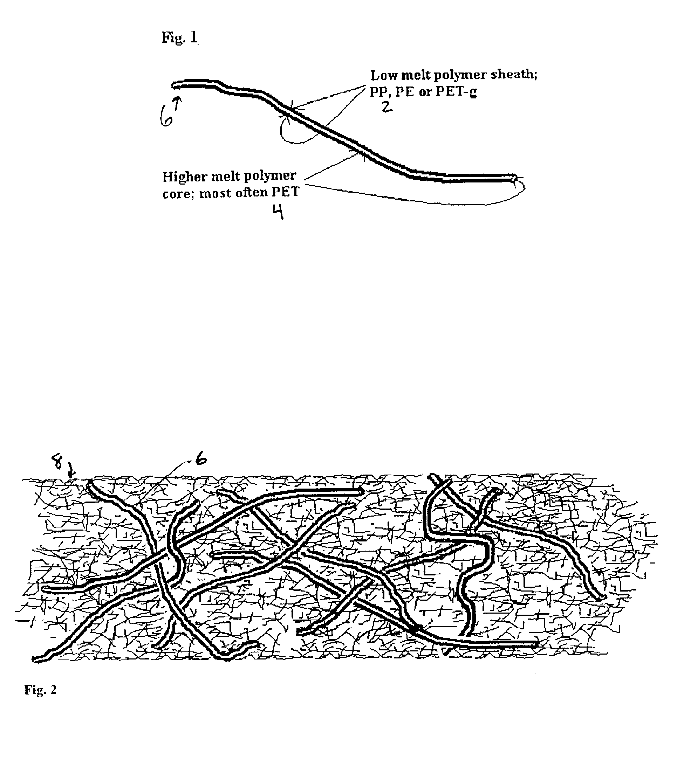

In further detail, Figure 1 depicts the bicomponent polymer fiber 6. Example polymer fibers include those available from KoSa, (formerly Hoechst), and the FIT Co. The inner core 4 of such fibers, are most often polyester and particularly PET, (polyethylene terepthalate) with a melting temperature of about 280°C. The outer sheath is most often a lower melting polyester, perhaps a copolymerized PET derived such as PET-g, or a polyolefin such as polypropylene or polyethylene.

In Figure 2 illustrates a cross-sectional view of a mineral wool batt 8 in which the bicomponent polymeric fibers 6 are interspersed. The mineral wool is represented by the short, fine lines and the bicomponent fibers are represented by the large multi-layered tubes. When incorporated into a mineral fiber batt, even in low percentages, the macroscopic bicomponent fibers provide a loft and a continuous structure within a relatively low density, highly open batt structure. The forming of such a batt may be accomplished in a variety of ways.

An air-forming process may be used, in which the fibers are carried and co-mingled in an air-stream and subsequently deposited on an air-permeable wire conveyer. However, it is preferred that the fiber dispersion and co-mingling processes are not destructive to the mineral fiber. An example air-forming process includes that designed by DOA GmbH, in which the fibers are dispersed and mixed in a high velocity air-stream.

In the wet-forming method such as in the papermaking process in which the fibers are dispersed and co-mingled in water and subsequently deposited and de-watered on a wire conveyor may be used.

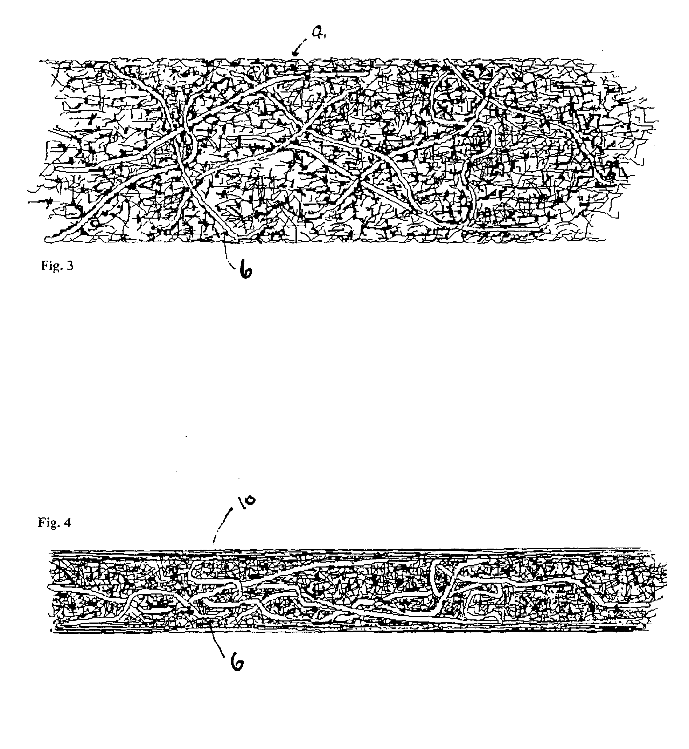

Figure 3 depicts the fibrous batt 8 heated above the melting point of the sheath polymer but below the melting point of the inner core polymer. The heating process follows the forming process. Heat is applied to the batt to provide a temperature in excess of the melting temperature of the bicomponent sheath. The sheath polymer layer melts and flows out into the fiber matrix and binds the mineral wool fibers to one another and to the core polymer fiber that has remained intact as a structural element of the panel. The loft and continuity of the batt is retained and the fibers are bound together.

The resulting panel after the step of consolidation is depicted in Figure 4. In the consolidation step, the bonded batt may be subjected to a sequential hot and cold plattened pressing. This serves to consolidate the batt further, while smoothing and compressing a porous skin layer 10 onto both sides of the finished panel. The hot stage of the pressing re-melts the binder while compressing and smoothing the surfaces. The cold stage re-solidifies the binder and sets the panel structure into place.

Furthermore, the formed acoustical panel may be further embossed with a pattern or design and/or molded into a desired shape or form. The term "thermo-formed" is used to describe all such processes where the formed acoustical panel is further processed by the application of heat and/or pressure to either emboss the panel or form it into various shapes or dimensions.

### Wet formed without consolidation

A sufficiently rigid and self-supporting panel may be formed without the consolidation step when the panel is wet formed. Support for the wet formed panel may be created by adding several percentages of pulped newsprint fiber. Pulped newsprint fiber may be used to impart rigidity and process wet-web strength in combination with very low bicomponent binder fibers. Additionally, natural fiber additions may also contribute rigidity and self-support. Examples include pulped sisal, hemp, abaca or other cellulosic fibers or cut strands of unpulped fibers in lengths of 1/4 inch or longer. Rigid inorganic fibers such as glass, mineral, and carbon may also be used. Chart 1 illustrates example formulations for wet-formed structures:

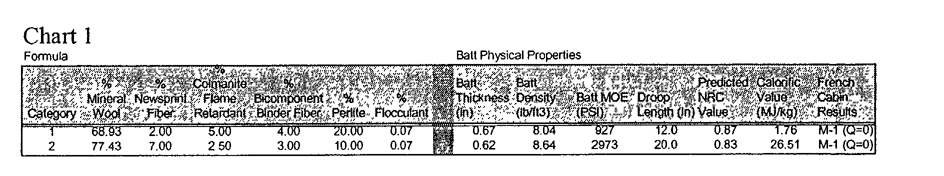

The droop length illustrated is the measured horizontal extension length of the sample material out from the edge of a support table, at which the material deflects or "droops" two inches downward and is a relative measure of the material rigidity. Panels with a 20 inch droop length will be self-supporting with minimal downward deflection in standard 2' x 2' and 2' x 4' ceiling support grids. The "French Cabin" flamespread test, (NFP 92-50 Epiradiateur test), and the calculated Calorific Values indicate the materials that will comply with the stringent M-O fire resistance performance for France.

Acoustical wet formed panels having bicomponent binder fibers can provide a low density, highly open, acoustically absorbent structure. There is a significant rebounding expansion of the material in the drying step of the process, and there is no migration of binder to close the surface porosity, such as with starch. The combination of newsprint and bicomponent fiber yields even greater wet-web strength and noise reduction coefficient, (NRC), than standard wet-formed mineral fiber products. The panels as low as 0.25 lb/ft² basis weight and material ¼ inch thick can be successfully processed. The present formed acoustical panel resists humidity induced sag, and can be made by standard Fourdrinier wet-forming techniques. The panels can be heated and formed into curved, shaped or embossed panels.

### Mono-filament polymeric fibers

Mono-filament polymeric fibers may also be added to the fibrous batt 8 to create the acoustical panels. Panels bound with mono-filament polymer fibers such as polypropylene or polyethylene may be successfully wet formed. Mono-filament polymeric fibers such as polypropylene, polyethylene terepthalate and polyethylene can be applied as binders in wet-formed mineral fiber panels to produce a self-supporting, flame resistant, highly acoustical and thermo-formable panel.

### Plastic particulate binders

Granulated polypropylene, polyester, and crosslinkable thermoplastic particulates such as the Wacker Vinnex™ core-shell binders may be applied as binders in air-formed acoustical ceiling panels. The particulates can be dispersed into airlaid webs. The formed batts can be thermally bonded to create highly acoustical soft-fiber panels that can be post-compressed or surface scrimmed for optimal rigidity and self-support. Additionally, particulates can be dispersed in water, flocculated and retained in wet-formed panels and thermally bonded in the drying process of the web.

Furthermore, latexes may be used as a binder. Latexes having a low glass transition temperature, (Tg) such as styrene-butadiene can be applied as binders. Latexes having Tg range from about -50°C to about 75°C may be used.

### Layered panels

Layered panels may be either dry formed or wet formed. In the dry-forming process the layering can be accomplished in several ways. Forming units can be placed in tandem along a conveyor forming screen; such commercially available dry-forming processes as the Danweb, A/S and M&J A/S systems capable of forming layered structures of a variety of products for the disposables and hygienic markets. Acoustical panels generally have greater thickness and basis weight than these products. Mineral fibers have significantly higher density than the organic fibers, fillers and absorbents that comprise the disposables. Other dry-forming systems based on lickerin roll/vacuum technology, such as the Laroche S.A and DOA GmbH systems may be used to deliver separate fiber streams to several lickerin-rolls along a conveyed forming screen. Alternatively, preformed non-woven scrims or batts may be unrolled and fed beneath or above a core batt fiber stream and thermally or chemically adhered to each other in a thermal bonding oven.

Furthermore, wet-forming techniques may be used in separate stock streams to one of several forming head-boxes along a conveyed forming wire, with the application of vacuum dewatering. An "Oliver" type vacuum drum or Fourdinier method may be used.

The multi-layer mineral fiber panel comprises one layer and a second layer which is co-formed or laminated to the other. The additional second layer may be comprised of binder of about 0.2% to about 15%. The binder may be comprised of bicomponent, low-melt monofilament binder fiber, a thermoplastic particulate, latex or resin binder, a thermosetting particulate, latex or resin binder, a combination thermoplastic/thermosetting particulate, latex, resin binder or a combination thereof. The filler may comprise about 85 to about 99.8%. The filler may be glass, synthetic polymeric, or natural cellulosic fibers or combinations.

The second layer may be employed as a facing layer to impart smoothness, homogeneity and surface finish to the product. The second layer may also contribute to the rigidity, strength and structural unity of the panel. The second layer may also be employed as a backing layer for support, strength and sag resistance and as a barrier to prevent sound from permeating through the product to increase the CAC (ceiling attenuation class) of the panel. Generally, the facing layer may be low density, permeable, thinner than the first or primary layer, and of a uniform formation and visual quality. The backing layer is typically impermeable to air and sound.

Additional layers may also be added. For example, a facing and backing may be co-formed or laminated to a core layer. Structures with more layers are also considered.

### Multiple mono-filament polymer fibers

A further method of forming an acoustical panel comprising manufacturing an acoustical panel having at least two mono-filament polymer fibers. In an embodiment, a first mono-filament polymer fiber and a second mono-filament polymer fiber are combined in a fibrous mix. The first polymer fiber has a melting point which is lower than the melting point of the second polymer fiber. The lower melting point polymer is intended to bind the surrounding fibers by substantially melting upon heating. The higher melting point polymer binds as a substantially unmelted fiber within the fibrous matrix of the panel. Of course, more than two types of polymer fibers may be used. It is contemplated that multiple polymer fibers having various melting points may be used.

In one embodiment, first and second fibers are combined and then dispersed and mixed with mineral wool fibers in an aqueous mix to form a wet fibrous batt 8. The wet fibrous batt 8 is dewatered and heated. Upon heating, the first polymer fiber substantially melts and binds the fibers together to aid in forming the acoustical panel.

### Particulate binders and polymer fibers

In this embodiment, a method is provided for forming an acoustical panel comprising both a dispersible polymer particulate binder and a polymer fiber. Of course multiple binders and fibers may be combined in this method. In the method the binders and fibers are dispersed and mixed with mineral wool to form a fibrous mix. The fibrous mix may then be combined to form a fibrous batt 8 which is then heated to substantially melt the particulate binders within the fibrous batt 8 to form the acoustical panel.

### Examples

The invention will be more easily understood by referring to the examples of the invention and the control examples that follow. The following examples are given for illustrative purposes and are not to be understood as limiting the present invention.

The humidity sag test used in the present examples was run in 4 cycles. One cycle is 17 hours at 82°F-90%RH, followed by 6 hours at 82°F-35%RH. Typically, the greatest sag deflection is observed during the 4^{th} cycle 90%RH condition.

The noise reduction coefficient (NCR) is determined by the reverberation room test ASTM C423. It averages the amount of sound absorption at 4 critical frequencies. Values range from 0.00 to 1.00.

FSR is a general indication of flame spread performance and the values for the FSR test were determined under the ASTME84 tunnel test.

In the present examples the air-forming system used are designed and manufactured by DOA GmbH in Wels, Austria. In the wet forming examples, an Armstrong wet-lay Fourdrinier pilot machine was used. Although there was a difference in the required fiber length of the bicomponent for the wet-lay process, and some difference in the formation quality and surface smoothness of the initial batt, both processes yielded adequately formed batts that compressed to smooth, rigid, self-supporting, durable, acoustical panels.

### Example 1

In Example 1, the material was air-formed by the DOA process. The finished compression and smoothing of the panel was accomplished on a Schott & Meissner Thermofix plattened hot/cold stage continuous compression unit. The formulation of the formed acoustical panel is listed below:

| Material | Mass% | Source | Specifications |
|---|---|---|---|
| Mineral Wool | 70 | Armstrong | 0.7-1.2 mm length |
| | | Pontarlier Plant | 4-6 micron |
| | | | diameter |
| Bicomponent | 30 | Leigh Fibers | Japanese PET/PET |
| Fiber | | Spartanburg, SC | 110°C sheath melt |
| | | | 4 denier |
| | | | 2 inch length |

Finished panel dimensions, density, and physical properties are listed below:

| Prototype Set | Density (lb/ft³) | Dimensions l,w,th. (inches) | Suspended Deflection (inches) | Deflection at 90% RH 4^{th} Cycle* (inches) | Projected NRC** (Imped.) unbacked | Projected NRC (Imped.) backed | FSR*** 30-30 Tunnel |
|---|---|---|---|---|---|---|---|
| 1 | 12.2 | 24,24,0.78 | (-)0.029 | (-)0.061 | 0.94 | 0.74 | 26 |
| 2 | 17.6 | 24,24,0.69 | (-)0.019 | (-)0.051 | 0.71 | 0.69 | - |

Furthermore, a standard application of paint was applied to the acoustical panels formed in Example 1. The paint was applied to a very tough and durable fiberglass scrim with which the product is faced. A metal tyne drag test, the "Hess rake" test, is used to measure of the surface scratch resistance of acoustical panels. The painted prototype material Hess rake break through value was 25.

### Example 2

In this Example, the binder level was reduced to form a thinner panel. The DOA air-lay process and the Thermofix compression unit were employed in this Example. One to two inch flax fibers were incorporated into the formulation to provide loft for a reduced density category. The chart bellow illustrates the tested results.

| Ctgry | Formulation Wool, Bico,Flax | | | Density (lb/ft³) | Dimensions l,w.th. (inches) | Suspended Deflection (inches) | Deflection at 90%RH 4^{th} Cycle* (inches) | NRC Tested (unbacked) | NRC Tested (backed) |
|---|---|---|---|---|---|---|---|---|---|
| 1 | 90 | 10 | 0 | 21.48 | 24,24,0.215 | (-)0.109 | (-)0.140 | - | - |
| 2 | 85 | 15 | 0 | 28.04 | 24,24,0.305 | (-)0.116 | (-)0.145 | - | - |
| 3 | 70 | 20 | 10 | 11.34 | 24,24,0.518 | (-)0.068 | (-)0.082 | 0.90 | 0.65 |
| 4 | 80 | 20 | 0 | 30.19 | 24,24,0.382 | (-)0.052 | (-)0.080 | 0.71 | 0.45 |

Furthermore, an acoustical panel formed in Example 2 was placed over the top of a wire cylinder and heated to 300°F in a convection oven. The panel was able to soften and conform to the shape of the cylinder. Upon cooling, the panel set into a tightly curved panel. No change in panel thickness was encountered.

### Example 3

Example 3 illustrates forming an acoustical panel by a wet-forming process on a Fourdrinier pilot line and then drying and thermally setting in a continuous convection oven. The bicomponent fiber used for this processing was obtained from KoSa Corporation, Charlotte, NC. This fiber, designated Cellbond 105 is a polyethelene sheath composition rather than a low melt PET sheath, and is only ½ inch long rather than 2 inches long. The core is PET. The formulations used in Example 3 are illustrated below:

| Material | Mass% | Source | Specifications |
|---|---|---|---|
| Mineral Wool | 90 | MFS, Bethlehem, | 0.7-1.2 mm length |
| | | PA | 4-6 micron diameter |
| Bicomponent Fiber | 10 | KoSa Fibers | Bico PE/PET |
| | | Charlotte, NC | 128°C sheath melt |
| | | | 4 denier |
| | | | ½ inch length |

Within this Example the Cellbond 105 dispersed very uniformly with the mineral wool in water. The dispersion dewatered rapidly on the Fourdrinier machine, yielding a reasonably well formed wet-mat that was adequately smoothed with press-rolls. No flocculant was required to assist in dewatering and a significantly low moisture content of the wet-mat, (42%), was determined. Of course a flocculant may be used. The drain-water was clean and fiber/particle free. The wet mats were transferred onto expanded metal screens for support through the roller conveyor of the dryer.

The material was dried in a belted through-convection oven and it set in approximately 30 minutes at 350°F. The resulting batt was observed to be significantly lower in density than a bat of similar formulation made by the air-forming process, 5.6 lb/ft³ rather than 15-20lb/ft³. This lower density presumably results from an expansion induced by the evaporation of water. The batts were compressed into panels using a static plattened press with top and bottom heated. The compressed batts were removed from the press as rapidly as possible and a cool heavy steel plate was put on top of it to avoid rebounding. Densities of 18-19 lb/ft³ were achieved and the resulting panels were relatively self-supporting and smooth.

While Applicants have set forth embodiments as illustrated and described above, it is recognized that variations may be made with respect to disclosed embodiments. Therefore, while the invention has been disclosed in various forms only, it will be obvious to those skilled in the art that many additions, deletions and modifications can be made without departing from the spirit and scope of this invention, and no undue limits should be imposed except as set forth in the following claims.

## Claims

1. An acoustical panel comprising:
- multi-component polymer fibers, each of the polymer fibers having a sheath layer substantially surrounding an inner core, the sheath layer comprising a first polymer having a melting point lower than a melting point of a second polymer comprising the inner core, and
- a material selected from the group selected from mineral wool, fiberglass, cellulosic material and combinations thereof.

2. The acoustical panel of claim 1, wherein the first polymer comprising the sheath layer has a melting point of between about 100°C to about 200°C.

3. The acoustical panel of claim 1, wherein the second polymer comprising the inner core has a melting point of at least about 160°C.

4. The acoustical panel of claim 1, wherein the first polymer comprising the sheath layer is selected from the group consisting of a polyester, a polyethylene, a polyolefin and combinations thereof.

5. The acoustical panel of claim 1, wherein the second polymer comprising the inner core is selected from the group consisting of a polyester, polypropylene, and combinations thereof.

6. The acoustical panel of claim 5, wherein the polyester is polyethylene terephthalate.

7. The acoustical panel of claim 1, wherein the mineral wool forms a fiber complex having the multi-component polymer fibers interdispersed within the mineral wool.

8. The acoustical panel of claim 1, wherein the outer layer is bound to the mineral wool.

9. The acoustical panel of claim 1, wherein the panel has an NRC value of at least about 0.65.

10. The acoustical panel of claim 1, further comprising a cellulosic material.

11. The acoustical panel of claim 10, wherein the cellulosic material is selected from the group consisting of newsprint, pulped sisal, hemp abaca and combinations thereof.

12. The acoustical panel of claim 10, wherein the cellulosic material comprises up to about 40% by weight of the panel.

13. The acoustical panel of claim 1, further including a reinforcement fiber having a length between about 0.2 inches to about 2 inches.

14. The acoustical panel of claim 1, wherein the multi-component fibers comprise from about 2% to about 40% by weight of the panel.

15. The acoustical panel of claim 1, wherein the mineral wool comprises from about 60% to 98% by weight of the panel.

16. The acoustical panel of claim 1, further having a density of between about 5 lb./ft³ to about 40 lb./ft³.

17. The acoustical panel of claim 16, wherein the density of the panel is between about 5 lb./ft³ to about 10 lb./ft³.

18. The acoustical panel of claim 1, wherein the panel has an embossed surface.

19. The acoustical panel of claim 1, wherein the panel exhibits a humidity sag test deflection at 90% of less than 0.125 inches.

20. A method of forming an acoustical panel comprising the steps of
- providing multi-component polymer fibers having a sheath layer surrounding an inner core with the sheath layer comprising a first polymer having a melting point lower than a melting point of a second polymer comprising the inner core,
- dispensing the polymer fibers and a component selected from the group consisting of mineral wool fibers, fiberglass, cellulosic materials or mixing the polymer fibers and a component selected from the group consisting of mineral wool fibers, fiberglass, cellulosic materials to form a fibrous batt, and
- melting the polymer sheath layers to form the panel.

21. The method of claim 20, wherein the polymer fibers and mineral fibers are mixed and dispersed in a high velocity air stream.

22. The method of claim 20, further comprising mixing and dispersing the polymer fibers and mineral fibers in water to form a wet mixture.

23. The method of claim 22, further including de-watering the wet mixture to form the fibrous batt.

24. The method of claim 20, wherein the fibrous batt is heated to a temperature above the melting temperature of the first polymer and below the melting temperature of the second polymer.

25. The method of claim 20, further comprising consolidating the formed fibrous batt.

26. The method of claim 25, wherein the formed acoustical panel is consolidated by sequential heating and cooling.

27. The method of claim 25, further comprising pressing the formed fibrous batt.

28. The method of claim 20, wherein the formed acoustical panel is form cured.

29. A method of forming an acoustical panel comprising the steps of
- providing mono-filament polymer fibers,
- dispersing and mixing the polymer fibers with mineral wool fibers in an aqueous mix to form a wet fibrous batt,
- dewatering the wet fibrous batt to form a dewatered batt, and
- melting the polymer fibers within the dewatered batt to form the panel.

30. The method of claim 29, wherein the mono-filament polymer fibers are selected from fibers consisting of polypropylene, polyethylene terephthalate, polyethylene and combinations thereof.

31. A method of forming an acoustical panel comprising the steps of
- providing dispersible polymer particulate binders,
- dispersing and mixing the particulate binders with mineral wool fibers in a high velocity air stream to form a fibrous batt, and
- melting the particulate binders within the fibrous batt to form the panel.

32. The method of claim 31, wherein the particulate binders are selected from the group consisting of polypropylene, polyesters, cross linkable thermoplastics and combinations thereof.

33. The method of claim 31, further comprising consolidating the formed fibrous batt.

34. The method of claim 33, wherein the fibrous batt is consolidated by sequential heating and cooling.

35. The method of claim 33, further comprising pressing the formed fibrous batt.

36. The method of claim 31, further comprising adhering a scrim to the formed fibrous batt.

37. A method of forming an acoustical panel comprising the steps of
- providing a dispersible polymer particulate binder having a glass transition temperature of between about -50°C to about 75°C,
- dispersing and mixing the particulate binder with mineral wool fibers in an aqueous mix to form a wet fibrous batt,
- dewatering the wet fibrous batt to form a dewatered batt,
- melting the particulate binders within the dewatered batt to form the fibrous batt, and
- thermo-forming the batt.

38. The method of claim 37, further comprising applying a scrim to the thermo-formed panel.

39. The method of claim 37, further comprising applying an organic coating to the thermo-formed panel.

40. An acoustical panel comprising
- a first layer including multi-component polymer fibers, the polymer fibers having a sheath layer substantially surrounding an inner core, the sheath layer comprising a first polymer having a melting point lower than a melting point of a second polymer comprising the inner core and mineral wool, and
- a second layer in contact with the first layer, the second layer including a binder and filler.

41. The acoustical panel of claim 40, wherein the binder is selected from the group consisting of multi-component polymer fibers, monocomponent polymer fibers, thermoplastic particulate, latexes, resins, thermosetting particulates and combinations thereof.

42. The acoustical panel of claim 40, wherein the filler is selected from the group consisting of glass, polymeric materials, cellulose and combinations thereof.

43. The method of claim 37, wherein the fibrous batt is thermo-formed simultaneously with the melting of the fibrous batt.

44. The method of claim 37, wherein the fibrous batt is thermo-formed after the particulate binder is melted.

45. A panel comprising a mono-filament polymer fiber and mineral wool.

46. A panel comprising
- a first mono-filament polymer,
- a second mono-filament polymer wherein the melting point of the first polymer is higher than the melting point of the second polymer, and
- mineral wool.
